# EUROPÄISCHE PATENTSCHRIFT

(11) **EP 3 324 067 B1**
(45) Veröffentlichungstag und Bekanntmachung des Hinweises auf die Patenterteilung: **12.05.2021**
(21) Anmeldenummer: 17202237.8
(22) Anmeldetag: 17.11.2017
(51) Int. Cl.: F16D 65/12

(54) **BREMSSCHEIBE**
BRAKE DISC
DISQUE DE FREIN

(30) Priorität: 18.11.2016 DE 102016222822
(43) Veröffentlichungstag der Anmeldung: 23.05.2018
(73) Patentinhaber: Gustav Magenwirth GmbH & Co. KG, 72574 Bad Urach (DE)
(72) Erfinder: RUOPP, Michael, 89180 Berghülen (DE)
(74) Vertreter: Friese Goeden Patentanwälte PartGmbB

(56) Entgegenhaltungen:
- EP-A1- 0 987 462
- DE-A1- 19 927 406
- DE-A1-102011 084 947
- DE-A1-102012 221 351
- DE-A1-102012 222 346

## Beschreibung

Die Erfindung betrifft eine Fahrradbremsscheibe für eine hydraulische Scheibenbremse gemäß dem Oberbegriff von Anspruch 1, wie z.B. aus DE 10 2012 221351 A1 bekannt.

Eine derartige Bremsscheibe ist aus der DE 10 2012 222 346 A1 bekannt. Die dort offenbarte Bremsscheibe weist ein Bremsband, das mit Nieten an einem Innenteil befestigt ist. Das Bremsband weist drei Schichten auf. Die außen liegenden Schichten sind aus einem Material mit einer hohen Wärmefestigkeit ausgebildet. Dazwischen ist eine Lage aus einem Material mit einer besseren Wärmeleitfähigkeit ausgebildet, das mit Kühlrippen verbunden ist. Die bekannten Bremsscheiben bieten eine gute Unterstützung bei der Kühlung des Bremsbandes, haben aber den Nachteil, dass ihr Aufbau aufwendig und teuer ist, und dass die Kühlleistung unabhängig von der Temperatur des Bremsbandes ist.

Der Erfindung liegt daher die Aufgabe zugrunde, eine Bremsscheibe anzugeben, die bei einem einfachen Aufbau eine gute Kühlung des Bremsbandes schafft.

Die Aufgabe wird erfindungsgemäß durch eine Bremsscheibe gemäß Anspruch 1 gelöst. Vorteilhafte Weiterbildungen der Erfindung finden sich in den Unteransprüchen.

Gemäß der Erfindung wird eine Fahrradbremsscheibe für eine hydraulische Scheibenbremse mit einem Bremsband aus einem ersten Material, das eine hohe Wärmefestigkeit aufweist, und einem Innenteil aus einem zweiten Material, das eine höhere Wärmeleitfähigkeit als das erste Material aufweist, angegeben, wobei das Bremsband mehrere Aussparungen aufweist, in die Fortsätze des Innenteils eingreifen.

Die Ausführung der Erfindung hat den Vorteil, dass das Drehmoment beim Bremsen von dem Bremsband auf das Innenteil vornehmlich über einen Kontakt zwischen den Fortsätzen des Innenteils und den Aussparungen des Bremsbandes übertragen wird und somit ein guter Kontakt zwischen dem Material des Bremsbandes und dem Material des Innenteils besteht, so dass die Wärme gut vom Bremsband in das Innenteil abgeführt werden kann.

Erfindungsgemäß können die Fortsätze des Innenteils jeweils zumindest einen Abschnitt aufweisen, in dem die Breite des Fortsatzes in Umfangsrichtung der Fahrradbremsscheibe radial nach außen zunimmt.

Die Erfindung wird im Folgenden anhand der in den Figuren gezeigten Ausführungsbeispiele beschrieben. Dabei werden folgende Bezugszeichen verwendet:
- 1: Bremsscheibe
- 10: Bremsbelag
- 11: Belagabschnitt
- 12: Befestigungsabschnitt
- 100: Bremsband
- 110: Aussparung
- 111: Auflaufabschnitt
- 112: Übergangsabschnitt
- 113: Klemmanschnitt
- 114: Stufe
- 115: Stufe
- 120: Fortsatz
- 121: vorderer Abschnitt
- 122: hinterer Abschnitt
- 130: Löcher
- 200: Innenteil
- 210: Fortsatz
- 211: Auflaufanlageanschnitt
- 212: Übergangsabschnitt
- 213: Klemmanlageabschnitt
- 220: Aussparung
- 230: Außenringabschnitt
- 231: Fase
- 232: Stufe
- 240: Speichen
- 250: Innenringabschnitt
- 260: Befestigungsöffnungen
- 261: Befestigungseinrichtung
- 262: Innenverzahnung
- 270: Ausnehmungen
- 280: Kühlflächen
- 290: Aussparungen
- 300: Verbindungsglied
- 400: Kühlvorrichtung
- 410: Fortsatz
- 411: Auflaufanlageanschnitt
- 412: Übergangsabschnitt
- 413: Klemmanlageabschnitt
- 420: Aussparung
- 430: Außenringabschnitt
- 440: Speichen
- 450: Innenringabschnitt
- 460: Befestigungsöffnungen
- 470: Ausnehmungen
- 480: Kühlflächen
- 490: Aussparungen
- 500: Kühlvorrichtung
- 510: Fortsatz
- 580: Kühlfläche
- 600: Kühlvorrichtung
- 610: Fortsatz
- 680: Kühlfläche
- α: Neigungswinkel des Auflaufanlageanschnitts
- β: Neigungswinkel des Klemmanlageabschnitts

Kurzbeschreibung der Figuren:
- Fig. 1: zeigt eine Seitenansicht einer Bremsscheibe gemäß einer Ausführung der Erfindung.
- Fig. 2: zeigt eine Detailansicht der Bremsscheibe von Fig. 1 im Bereich des in Fig. 1 mit II markierten Kreises.
- Fig. 3: zeigt der Fig. 1 entsprechende Seitenansicht der Bremsscheibe von Fig. 1 mit einem schematisch dargestellten Bremsbelag.
- Fig. 4: zeigt eine Schnittansicht der Bremsscheibe von Fig. 1 im Bereich der Detailansicht von Fig. 2 entlang der Linien IV-IV von Fig. 2.
- Fig. 5: zeigt eine Schnittansicht der Bremsscheibe von Fig. 1 im Bereich der Detailansicht von Fig. 2 entlang der Linien V-V von Fig. 2.
- Fig. 6: zeigt eine der Fig. 5 entsprechende Schnittansicht einer Bremsscheibe gemäß einer weiteren Ausführung der Erfindung.
- Fig. 7: zeigt eine schematische Darstellung des Fortsatzes zur Veranschaulichung der Neigungswinkel.
- Fig. 8: zeigt eine der Fig.1 entsprechende Seitenansicht einer Bremsscheibe gemäß einer weiteren Ausführung der Erfindung.
- Fig. 9: zeigt Aufsicht der Bremsscheibe von Fig. 8.
- Fig. 10: zeigt eine schematische Teilansicht einer Bremsscheibe gemäß einer weiteren Ausführung der Erfindung.
- Fig. 11: zeigt eine schematische Teilansicht einer Bremsscheibe gemäß einer weiteren Ausführung der Erfindung.
- Fig. 12: zeigt eine schematische Teilansicht einer Bremsscheibe gemäß einer weiteren Ausführung der Erfindung.
- Fig. 13: zeigt eine schematische Teilansicht einer Bremsscheibe gemäß einer weiteren Ausführung der Erfindung.
- Fig. 14: zeigt eine schematische Teilansicht einer Bremsscheibe gemäß einer weiteren Ausführung der Erfindung.
- Fig. 15: zeigt eine schematische Teilansicht einer Bremsscheibe gemäß einer weiteren Ausführung der Erfindung.
- Fig. 16: zeigt eine schematische Teilansicht einer Bremsscheibe gemäß einer weiteren Ausführung der Erfindung.
- Fig. 17: zeigt eine schematische Teilansicht einer Bremsscheibe gemäß einer weiteren Ausführung der Erfindung.
- Fig. 18: zeigt eine der Fig.1 entsprechende Seitenansicht einer Bremsscheibe gemäß einer weiteren Ausführung der Erfindung.
- Fig. 19: zeigt eine Detailansicht der Bremsscheibe von Fig. 18 im Bereich des in Fig. 18 mit XIX markierten Kreises.
- Fig. 20: zeigt eine schematische Teilansicht einer Bremsscheibe gemäß einer weiteren Ausführung der Erfindung.
- Fig. 21: zeigt eine schematische Teilansicht einer Bremsscheibe gemäß einer weiteren Ausführung der Erfindung.
- Fig. 22: zeigt eine Seitenansicht eines Innenteils mit einer Kühlvorrichtung einer Bremsscheibe gemäß einer weiteren Ausführung der Erfindung.
- Fig. 23: zeigt eine Aufsicht des Innenteils und der Kühlvorrichtung von Fig. 22.
- Fig. 24: zeigt eine Detailansicht des Innenteils und der Kühlvorrichtung von Fig. 22 im Bereich des in Fig. 23 mit XXIV markierten Kreises.
- Fig. 25: zeigt eine Seitenansicht eines Innenteils mit einer Kühlvorrichtung einer Bremsscheibe gemäß einer weiteren Ausführung der Erfindung.
- Fig. 26: zeigt eine Aufsicht des Innenteils und der Kühlvorrichtung von Fig. 25.
- Fig. 27: zeigt eine perspektivische Ansicht des Innenteils und der Kühlvorrichtung von Fig. 25.
- Fig. 28: zeigt eine Seitenansicht eines Innenteils mit einer Kühlvorrichtung einer Bremsscheibe gemäß einer weiteren Ausführung der Erfindung.
- Fig. 29: zeigt eine Aufsicht des Innenteils und der Kühlvorrichtung von Fig. 28.
- Fig. 30: zeigt eine perspektivische Ansicht des Innenteils und der Kühlvorrichtung von Fig. 28.
- Fig. 31: zeigt eine Seitenansicht eines Innenteils mit einer Kühlvorrichtung einer Bremsscheibe gemäß einer weiteren Ausführung der Erfindung.
- Fig. 32: zeigt eine Aufsicht des Innenteils und der Kühlvorrichtung von Fig. 31.
- Fig. 33: zeigt eine perspektivische Ansicht des Innenteils und der Kühlvorrichtung von Fig. 32.

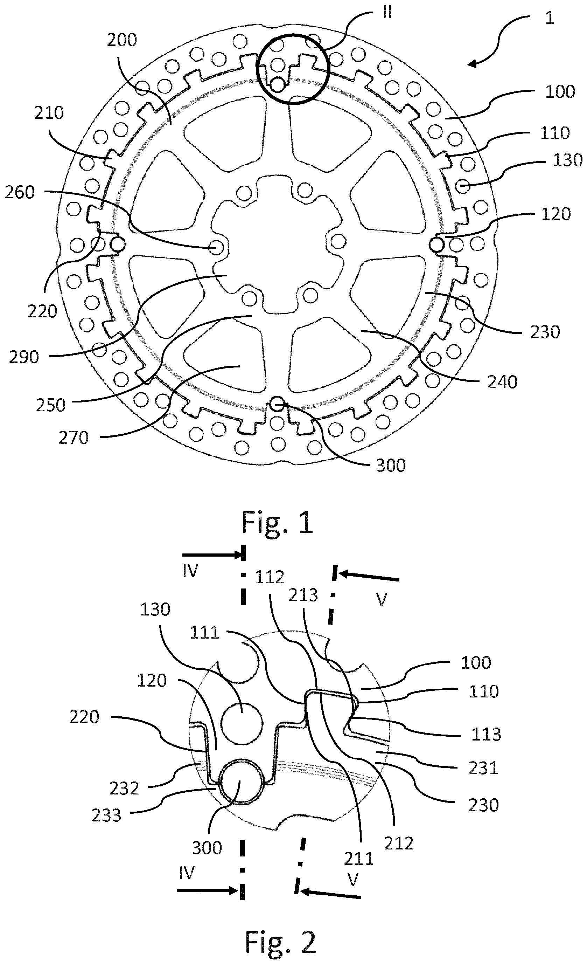

Die Figuren 1 bis 5 und 7 zeigen eine Bremsscheibe gemäß einer Ausführung der Erfindung. Die dargestellte Bremsscheibe ist eine Fahrradbremsscheibe insbesondere für eine hydraulische Fahrradscheibenbremse. Die Bremsscheibe 1 weist ein Bremsband 100 auf, das mit einem Innenteil 200 verbunden ist. In dem Bremsband 100 sind Aussparung 110 vorgesehen, in die entsprechende an dem Innenteil vorgesehene Fortsätze 210 eingreifen.

Zwischen jeweils fünf Aussparung/Fortsatz-Paaren 110/210 sind an dem Bremsband 100 Fortsätze 120 und an dem Innenteil 200 Aussparungen 220 vorgesehen, in die die Fortsätze 120 eingreifen und mit einem Verbindungsglied 300 verbunden sind. Dargestellt ist eine Nietverbindung.

Die Aussparungen 110 weisen jeweils einen Auflaufabschnitt 111, einen Übergangsabschnitt 112 und einen Klemmanschnitt 113 auf. Die Fortsätze 210 des Innenteils 200 sind entsprechend ausgebildet und weisen jeweils einen Auflaufanlageanschnitt 211, einen Übergangsabschnitt 212 und einen Klemmanlageabschnitt 213 auf.

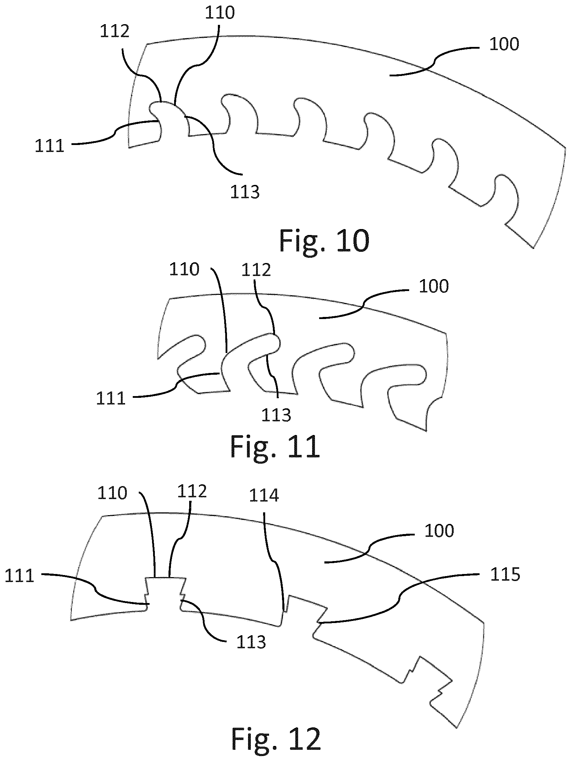

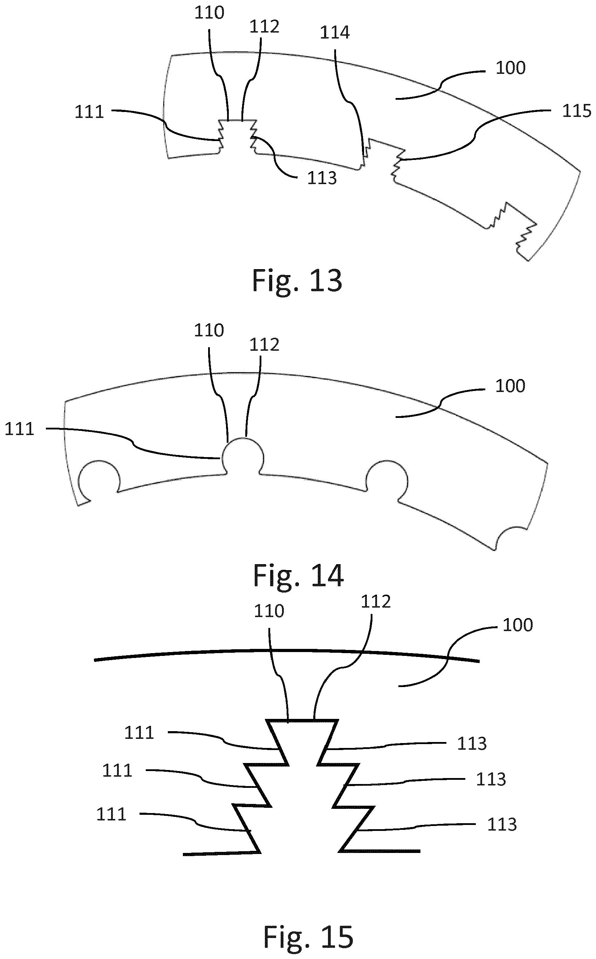

Wie in den Ausführungsbeispielen der Figuren 12 und 13 gezeigt, können in den Auflaufabschnitt bzw. dem Klemmabschnitt 113 eine oder mehrere Stufen 114 bzw. 115 vorgesehen sein. Die in die Aussparungen 110 eingreifenden Fortsätze des in diesen Ausführungen nicht dargestellten Innenteils 200 sind entsprechend mit Stufen ausgebildet.

In dem Bremsband 100 können - müssen aber nicht - Löcher 130 vorgesehen sein. Alternativ oder zusätzlich kann das Bremsband 100 auch wellenförmig ausgebildet sein.

Das Innenteil weist einen Außenringabschnitt 230 auf, der über Speichen 240 mit einem Innenringabschnitt 250 verbunden ist.

In der Mitte sind Befestigungsöffnungen 260 vorgesehen, durch die Bolzen oder andere Befestigungsmittel gesteckt werden können, um die Bremsscheibe auf dem Fachmann bekannte Weise an der Nabe eines Fahrrads zu befestigen.

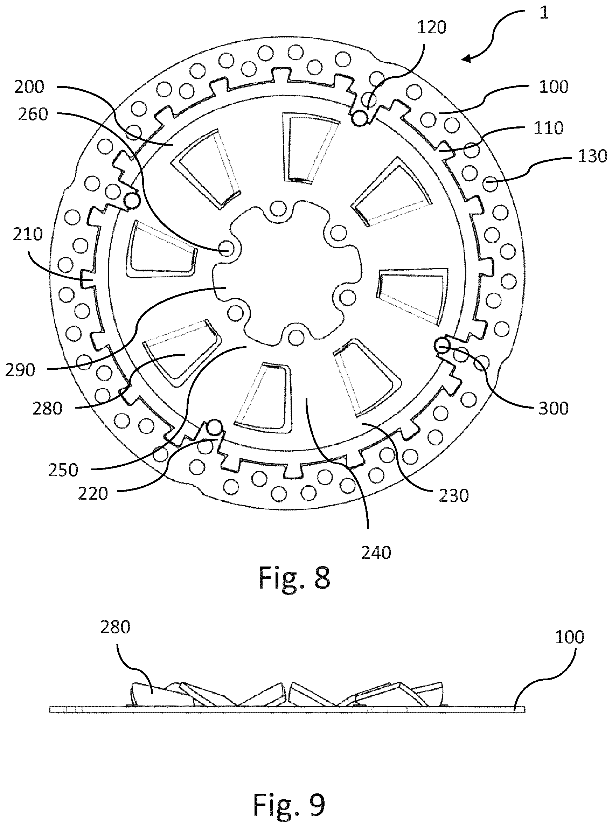

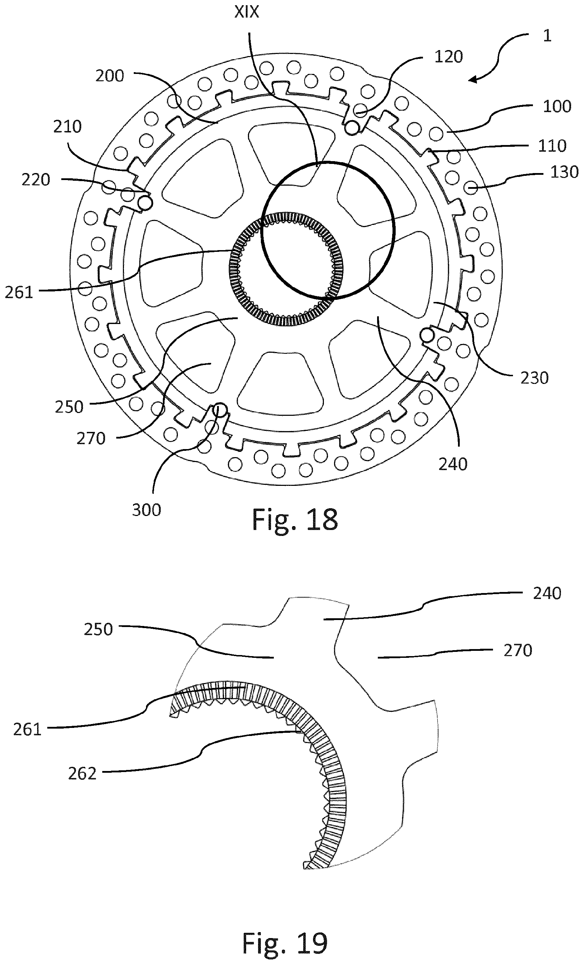

Zwischen den Speichen 240 sowie dem Außenring 230 und dem Innenring 250 sind Ausnehmungen 270 vorgesehen. In den Ausnehmungen 270 können Kühlflächen 280 vorgesehen sein, wie in der Ausführung von Fig. 8 bzw. 18 gezeigt.

In der Mitte sind Aussparungen 290 vorgesehen, die mit der Nabe zur Drehmomentübertragung in Eingriff kommen können.

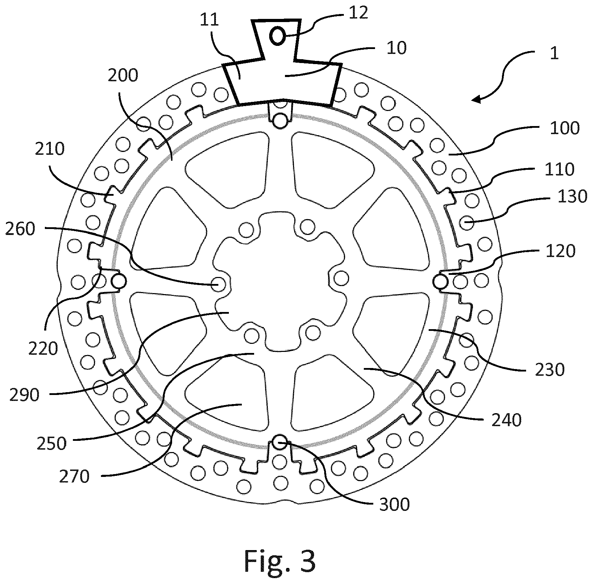

In Fig. 3 ist schematisch ein Bremsbelag dargestellt, der das Bremsband 100 und die Fortsätze 210 des Innenteils überstreicht.

Die Abmessung (Winkel, bzw. Kreisumfang) der Fortsätze 210 des Innenteils machen in Umfangrichtung ungefähr 40% der entsprechenden Abmessung der dazwischen angeordneten Abschnitte des Bremsbandes aus.

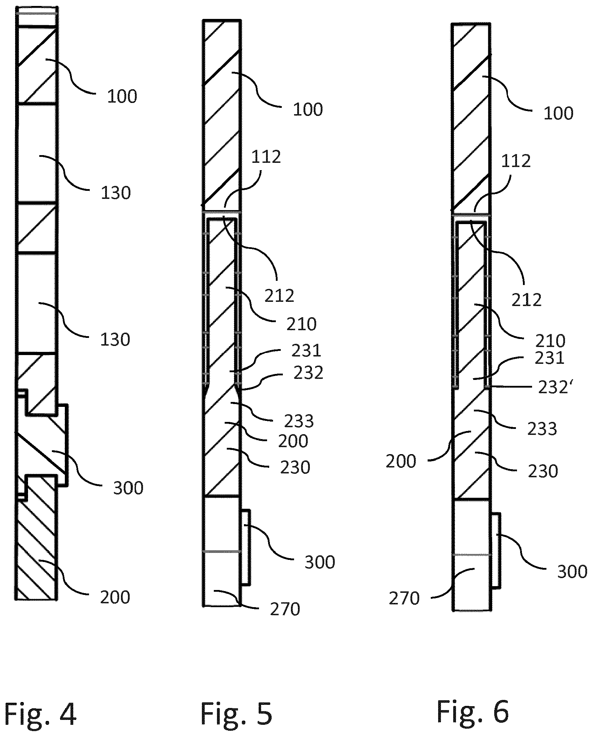

Wie in Fig. 5 gezeigt, kann die Materialstärke des Innenteils 200 von dem Fortsatz 210 mit geringerer Materialstärke zu dem Außenring 230 mit größerer Materialstärke allmählich in Form einer Fase 231 übergehen. Alternativ kann auch eine Stufe 232 vorgesehen sein, wie in Fig. 6 dargestellt.

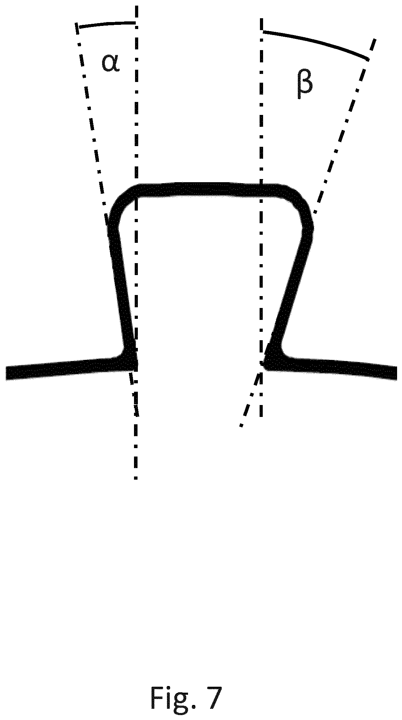

Fig. 7 zeigt eine schematische Darstellung des Fortsatzes zur Veranschaulichung der Neigungswinkel, d.h. des Neigungswinkel α des Auflaufanlageanschnitts 111 und des Neigungswinkels β des Klemmanlageabschnitts 113.

Bei der in den Figuren 8 und gezeigten Ausführung, die im Übrigen der Ausführung der Figuren 1 bis 4 entspricht, auf deren Beschreibung verwiesen wird, sind als Kühlvorrichtung Kühlflächen 280 in den Ausnehmungen 270 des Innenteils 200 vorgesehen.

Die Figuren 10 bis 15 zeigen weitere Ausführungen der Erfindung. Gleiche Bezugszeichen bezeichnen gleiche Teile bzw. Merkmale. Auf die Beschreibung der anderen Ausführungen wird verwiesen und die Beschreibung wird vornehmlich auf die Beschreibung der Besonderheiten der vorliegenden Ausführung gerichtet. In den Figuren 10 bis 15 werden Varianten der Ausbildung der Aussparungen 110 bzw. Fortsatze 210 dargestellt, die gemäß der Erfindung beliebig kombiniert werden können. Vorteilhafterweise werden bei einer Ausführung jedoch gleiche Formen verwendet. Diese oder ähnliche Übergänge können auch bei allen anderen in dieser Anmeldung gezeigten Ausführungen vorgesehen werden.

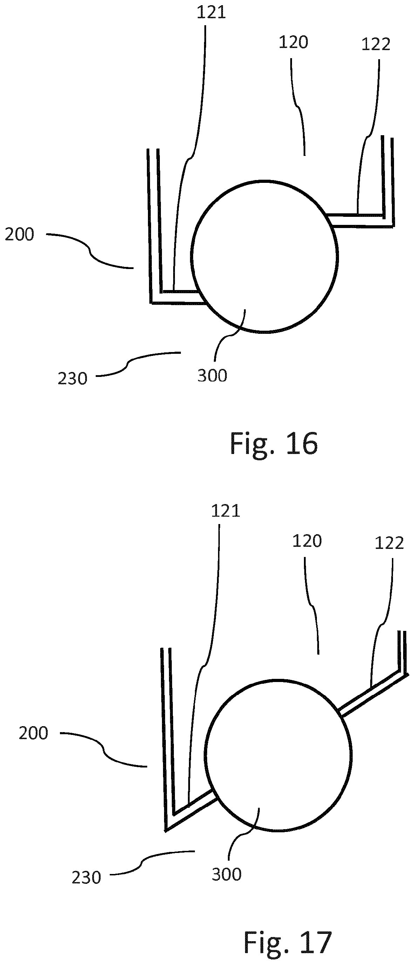

Gemäß Fig. 10 sind die Aussparungen 110 bzw. Fortsätze (entsprechend ausgebildet aber nicht dargestellt) sichelförmig bzw. Bogenförmig ausgebildet. Gemäß Fig. 10 sind die Sicheln bzw. Bögen in Drehrichtung nach vorne gerichtet. Gemäß Fig. 11 können die Aussparungen 110 bzw. Fortsätze auch andersherum ausgebildet sein. Gemäß den Figuren 12 und 13 können die Aussparungen 110 bzw. Fortsätze wie zwei bzw. mehrere übereinander angeordnete Schwalbenschwänze ausgebildet sein. Gemäß Fig. 15 können die Aussparungen 110 bzw. Fortsätze ringförmig bzw. kreisförmig ausgebildet sein. Gemäß Fig. 16 können die Aussparungen 110 bzw. Fortsätze tannenförmig (oder mit anderen Worten wie mehrere aufeinanderfolgende nach außen kleiner werdende Schwalbenschwänze) ausgebildet sein.

Die Figuren 16 und 17 zeigen zwei weitere Ausführungen der Erfindung. Gleiche Bezugszeichen bezeichnen gleiche Teile bzw. Merkmale. Auf die Beschreibung der anderen Ausführungen wird verwiesen und die Beschreibung wird vornehmlich auf die Beschreibung der Besonderheiten der vorliegenden Ausführung gerichtet. In den Figuren 16 und 17 werden alternative Übergänge bei den Verbindungsgliedern 300 dargestellt. Diese oder ähnliche Übergänge können auch bei allen anderen in dieser Anmeldung gezeigten Ausführungen vorgesehen werden. Bei der Ausführung von Fig. 16 sind der vordere Abschnitt 121 und der hintere Abschnitt 122 des Fortsatzes 120 in verschiedenen Abständen von der Mitte der Bremsscheibe angeordnet, d.h. der vordere Abschnitt 121 ist dichter zur Mitte angeordnet. Dadurch ergibt sich eine bessere und weniger belastende Drehmomentübertragung im Bereich des Verbindungselements 300. Der vordere Abschnitt 121 und/oder der hintere Abschnitt 121 können im gleichen oder unterschiedlichen Winkeln geneigt ausgebildet sein, wie in Fig. 17 gezeigt.

Die Figuren 18 bis 19 zeigen eine weitere Ausführung der Erfindung. Gleiche Bezugszeichen bezeichnen gleiche Teile bzw. Merkmale. Auf die Beschreibung der anderen Ausführungen wird verwiesen und die Beschreibung wird vornehmlich auf die Beschreibung der Besonderheiten der vorliegenden Ausführung gerichtet. In den Figuren 18 bis 19 ist eine andere Befestigung der Bremsscheibe 1 an die Nabe des Fahrzeugs dargestellt. Diese Befestigung kann auch bei allen anderen in dieser Anmeldung gezeigten Ausführungen anstelle der Aussparungen 290 vorgesehen werden. In der Mitte des Innenteils 200 ist eine Befestigungseinrichtung 261 vorgesehen, die einen Innenverzahnung 262 aufweist, die mit einer an der Nabe vorgesehenen Außenverzahnung zur Drehmomentübertragung in Eingriff sein kann.

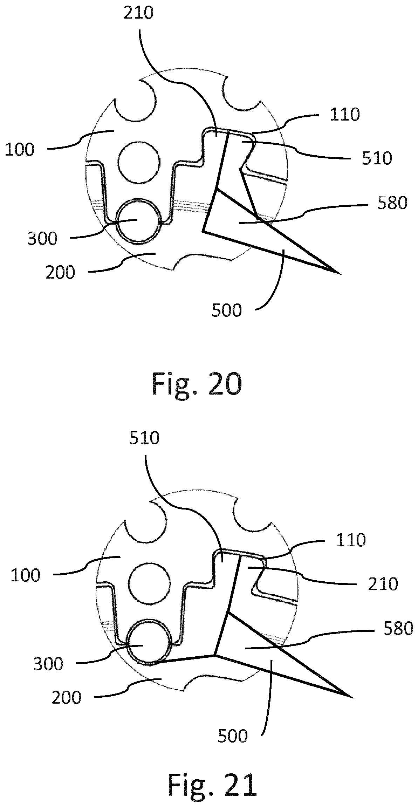

Die Figuren 20 und 21 zeigen zwei weitere Ausführungen der Erfindung. Gleiche Bezugszeichen bezeichnen gleiche Teile bzw. Merkmale. Auf die Beschreibung der anderen Ausführungen wird verwiesen und die Beschreibung wird vornehmlich auf die Beschreibung der Besonderheiten der vorliegenden Ausführung gerichtet. In den Figuren 20 und 21 werden Kühlvorrichtungen 500 gezeigt, die zusammen mit den Fortsätzen 210 des Innenteils 200 in Aussparungen 110 des Bremsbands 100 eingesetzt werden können. Die Kühlvorrichtungen 500 weisen dazu Fortsätze 510 auf, deren Form dem Teil des Fortsatzes 210 des Innenteils 200 entspricht, der wegegelassen worden ist, um durch den Fortsatz der Kühlvorrichtung ersetzt zu werden. Gemeinsam entsprechen die Fortsätze 210, 510 der Form der Aussparung 110 des Bremsbands 100, so dass sie dort gemeinsam eingesetzt werden können. Der Fortsatz 210 nimmt das Drehmoment auf und der Fortsatz 510 überträgt die Wärme zur Kühlfläche 580. Bei der Ausführung von Fig. 20 ist der Fortsatz 510 der Kühlvorrichtung 500 in Drehrichtung hinter dem Fortsatz 210 des Innenteils 200 und bei der Ausführung von Fig. 21 davor angeordnet.

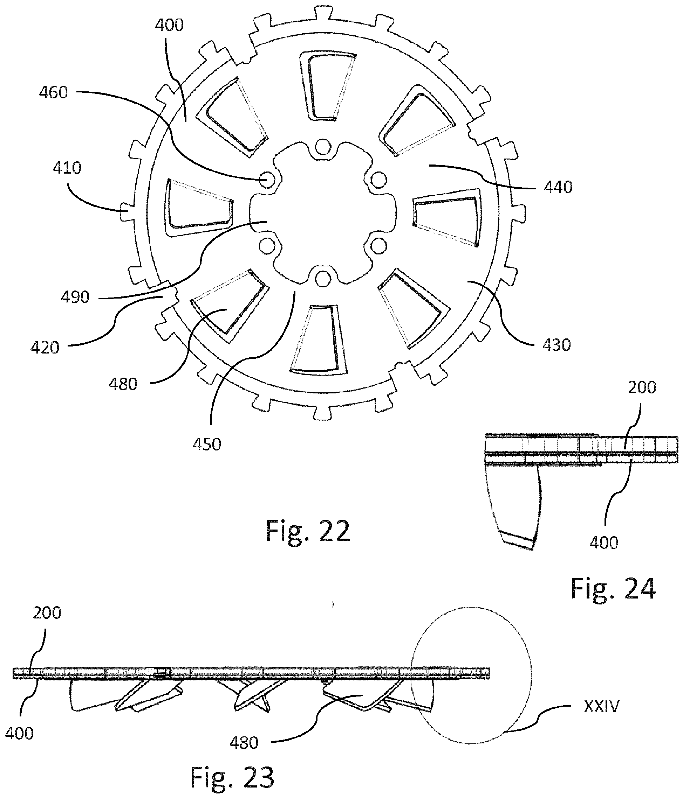

Die Figuren 22 bis 24 zeigen eine weitere Ausführung der Erfindung. Gleiche Bezugszeichen bezeichnen gleiche Teile bzw. Merkmale. Auf die Beschreibung der anderen Ausführungen wird verwiesen und die Beschreibung wird vornehmlich auf die Beschreibung der Besonderheiten der vorliegenden Ausführung gerichtet. In den Figuren 22 bis 24 wird das Innenteil 200 gezeigt, das in das nicht dargestellte Bremsband eingebaut werden kann, wobei die Fortsätze 210 in die entsprechenden Aussparungen 110 eingesetzt und die Teile mit den Verbindungsgliedern 300 (z.B. Nieten) verbunden werden.

Bei der Ausführung von den Figuren 22 bis 24 ist eine Kühlvorrichtung 400 vorgesehen, deren Form im Wesentlichen der Form des Innenteils 200 entspricht. Das Innenteil weist eine geringere Materialstärke auf, als die Innenteile der anderen Ausführungen. Die Kühlvorrichtung 400 und das Innenteil 200 weisen zusammen eine Materialstärke auf, die der Materialstärke der anderen Ausführungen entspricht. Diese Ausführung hat aber den Vorteil, dass sie insgesamt leichter ist, weil das Innenteil im Bereich der Kühlflächen 480 der Kühlvorrichtung 400 nur Ausnehmungen 270, aber keine Kühlflächen 280 aufweist. So weist die Kühlvorrichtung 400 Kühlflächen 480 auf, die sich schräg zur Fahrzeugmitte nach Innen erstrecken. Diese sind in dem Bereich der Ausnehmungen 270 des Innenteils angeordnet. Somit können durch die zweiteilige Aufbauweise des Innenteils 200 (Innenteil 200 und Kühlvorrichtung 400) die Kühlflächen 480 dünner und somit leichter ausgebildet werden.

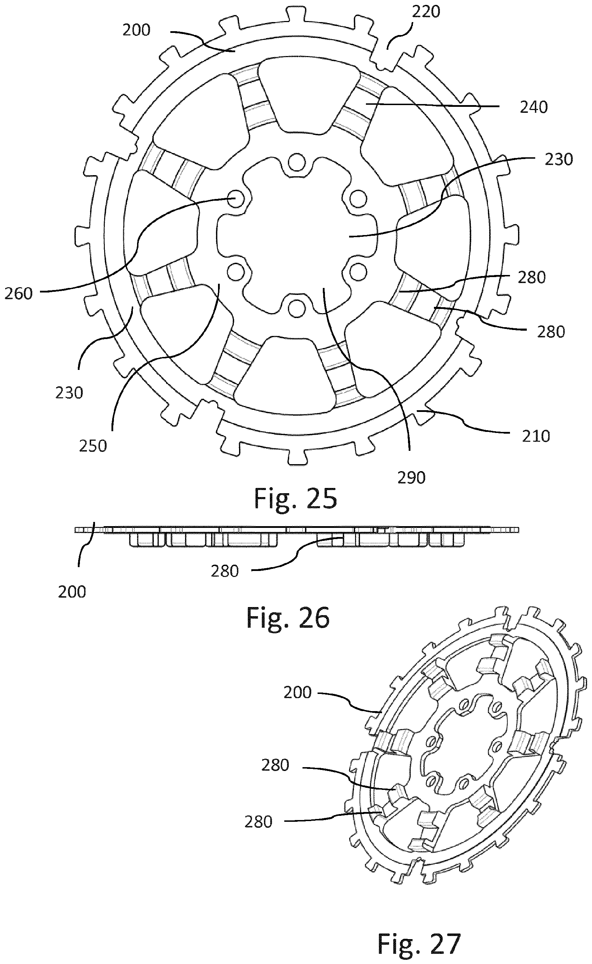

Die Figuren 25 bis 27 zeigen eine weitere Ausführung der Erfindung. Gleiche Bezugszeichen bezeichnen gleiche Teile bzw. Merkmale. Auf die Beschreibung der anderen Ausführungen wird verwiesen und die Beschreibung wird vornehmlich auf die Beschreibung der Besonderheiten der vorliegenden Ausführung gerichtet. In den Figuren 25 bis 27 wird das Innenteil 200 gezeigt, das in das nicht dargestellte Bremsband eingebaut werden kann, wobei die Fortsätze 210 in die entsprechenden Aussparungen 110 eingesetzt und die Teile mit den Verbindungsgliedern 300 (z.B. Nieten) verbunden werden.

Bei der Ausführung von den Figuren 25 bis 27 sind Kühlvorrichtung Kühlflächen 280 vorgesehen, die in Form von Kühlrippen auf den Speichen 240 angeordnet sind, die das Drehmoment von dem Außenring 230 zu dem Innenring 250 übertragen.

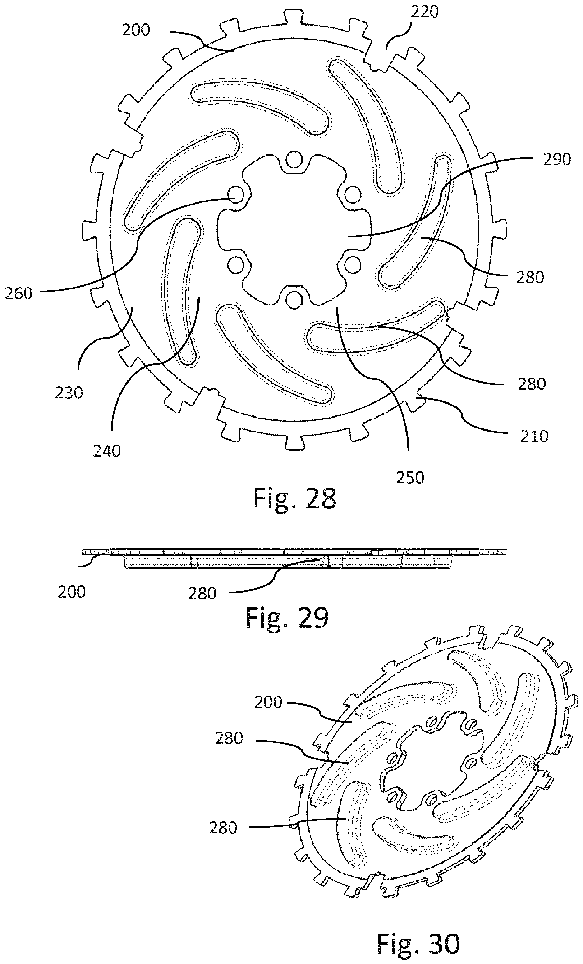

Die Figuren 28 bis 30 zeigen eine weitere Ausführung der Erfindung. Gleiche Bezugszeichen bezeichnen gleiche Teile bzw. Merkmale. Auf die Beschreibung der anderen Ausführungen wird verwiesen und die Beschreibung wird vornehmlich auf die Beschreibung der Besonderheiten der vorliegenden Ausführung gerichtet. In den Figuren 28 bis 30 wird das Innenteil 200 gezeigt, das in das nicht dargestellte Bremsband eingebaut werden kann, wobei die Fortsätze 210 in die entsprechenden Aussparungen 110 eingesetzt und die Teile mit den Verbindungsgliedern 300 (z.B. Nieten) verbunden werden.

Bei der Ausführung von den Figuren 28 bis 30 sind Kühlvorrichtung Kühlflächen 280 vorgesehen, die in Form von Kühlrippen auf der Fläche des Innenteils 200 angeordnet sind. Die Kühlrippen können zur Materialeinsparung hohl ausgebildet sein. Die Ausführung weist keine Ausnehmungen 270 auf.

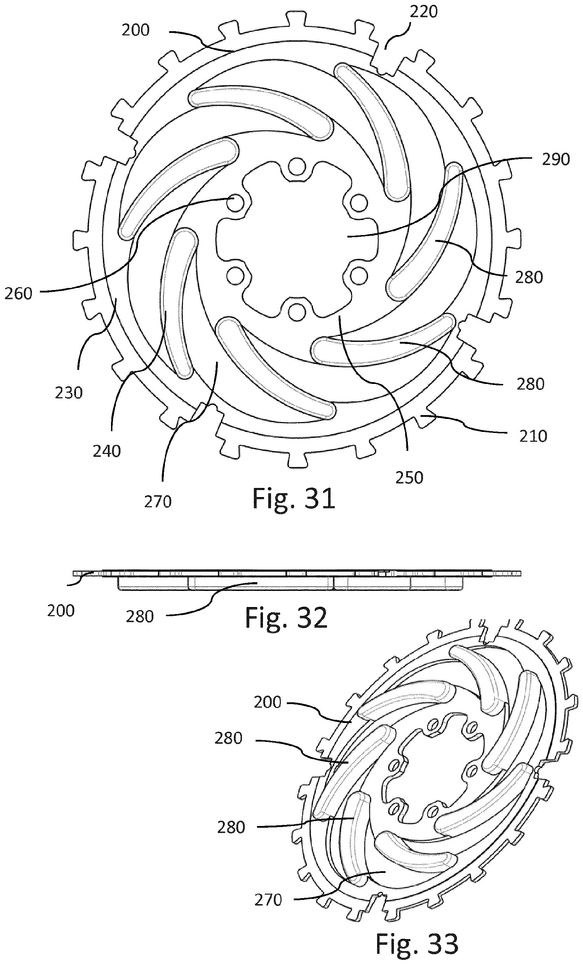

Die Figuren 31 bis 33 zeigen eine weitere Ausführung der Erfindung. Gleiche Bezugszeichen bezeichnen gleiche Teile bzw. Merkmale. Auf die Beschreibung der anderen Ausführungen wird verwiesen und die Beschreibung wird vornehmlich auf die Beschreibung der Besonderheiten der vorliegenden Ausführung gerichtet. In den Figuren 31 bis 33 wird das Innenteil 200 gezeigt, das in das nicht dargestellte Bremsband eingebaut werden kann, wobei die Fortsätze 210 in die entsprechenden Aussparungen 110 eingesetzt und die Teile mit den Verbindungsgliedern 300 (z.B. Nieten) verbunden werden.

Bei der Ausführung von den Figuren 31 bis 33 sind Kühlvorrichtung Kühlflächen 280 vorgesehen, die in Form von Kühlrippen zwischen Ausnehmungen 270 angeordnet sind. Die Kühlrippen können zur Materialeinsparung hohl ausgebildet sein. Die Kühlflächen 280 haben hier die Doppelfunktion der Kühlung und der Übertragung des Drehmoments von dem Außenring 230 zu dem Innenring 250. Die Kühlflächen 280 sind somit auf den Speichen 240 ausgebildet bzw. die Speichen 240 sind als Kühlflächen ausgebildet.
Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Fahrradbremsscheibe (1) für eine hydraulische Scheibenbremse mit mit einem Bremsband (100) aus einem ersten Material, das eine hohe Wärmefestigkeit aufweist, und einem Innenteil (200) aus einem zweiten Material, das eine höhere Wärmeleitfähigkeit als das erste Material aufweist,
wobei das Bremsband (100) mehrere Aussparungen (110) aufweist, in die Fortsätze (210) des Innenteils (200) eingreifen,
**dadurch gekennzeichnet, dass** die Fortsätze (210) des Innenteils (200) jeweils zumindest einen Abschnitt aufweisen, in dem die Breite des Fortsatzes (210) in Umfangsrichtung der Fahrradbremsscheibe (1) radial nach außen zunimmt.

2. Fahrradbremsscheibe (1) nach Anspruch 1, **dadurch gekennzeichnet, dass** die Aussparungen (110) des Bremsbandes (100) jeweils zumindest einen Abschnitt aufweisen, in dem die Breite der Aussparung (110) in Umfangsrichtung der Bremsscheibe (1) radial nach außen zunimmt.

3. Fahrradbremsscheibe (1) nach einem der vorhergehenden Ansprüche, **dadurch gekennzeichnet, dass** die Fortsätze (210) des Innenteils (200) jeweils mehrere Abschnitte aufweisen, in denen die Breite des Fortsatzes (210) in Umfangsrichtung der Fahrradbremsscheibe (1) radial nach außen zunimmt.

4. Fahrradbremsscheibe (1) nach einem der vorhergehenden Ansprüche, **dadurch gekennzeichnet, dass** die Aussparungen (110) des Bremsbandes (100) jeweils mehrere Abschnitte aufweisen, in denen die Breite der Aussparung (110) in Umfangsrichtung der Fahrradbremsscheibe (1) radial nach außen zunimmt.

5. Fahrradbremsscheibe (1) nach einem der vorhergehenden Ansprüche, **dadurch gekennzeichnet, dass** zumindest ein Fortsatz (210) des Innenteils (200) eine Verschleißanzeigeeinrichtung aufweist.

6. Fahrradbremsscheibe (1) nach einem der vorhergehenden Ansprüche, **dadurch gekennzeichnet, dass** das Bremsband (100) mehrere sich radial nach innen erstreckende Fortsätze (120) aufweist, die in entsprechende Aussparungen (220) des Innenteils (200) eingreifen.

7. Fahrradbremsscheibe (1) nach einem der vorhergehenden Ansprüche, **dadurch gekennzeichnet, dass** an dem Innenteil (200) Kühlflächen (280) ausgebildet sein.

8. Fahrradbremsscheibe (1) nach einem der vorhergehenden Ansprüche, **dadurch gekennzeichnet, dass** die Fahrradbremsscheibe (1) eine Kühlvorrichtung (400) mit Kühlflächen (480) aufweist.

9. Fahrradbremsscheibe (1) nach Anspruch 8, **dadurch gekennzeichnet, dass** die Kühlvorichtung (400) Fortsätze (410) aufweist, die gemeinsam mit Fortsätzen (210) des Innenteils (200) in zumindest einige der Aussparungen (110) des Bremsbandes (100) eingreifen.

10. Fahrradbremsscheibe (1) nach einem der vorhergehenden Ansprüche, bei der die Abmessung der Fortsätze (210) des Innenteils (200) in Umfangrichtung weniger als 60%, vorzugsweise weniger als 55%, weiter vorzugsweise weniger als 50%, noch weiter vorzugsweise weniger als 45 % und bevorzugt ungefähr 40% der entsprechenden Abmessung der dazwischen angeordneten Abschnitte des Bremsbandes (100) ausmachen.

11. Fahrradbremsscheibe (1) nach einem der vorhergehenden Ansprüche, bei der die Abmessung der Fortsätze (210) des Innenteils (200) in Umfangrichtung mehr als 20%, vorzugsweise mehr als 25%, weiter vorzugsweise mehr als 30%, noch weiter vorzugsweise mehr als 35 % und bevorzugt ungefähr 40% der entsprechenden Abmessung der dazwischen angeordneten Abschnitte des Bremsbandes (100) ausmachen.

12. Fahrradbremsscheibe (1) nach einem der vorhergehenden Ansprüche, bei der die in die Aussparungen (110) des Bremsbandes (100) eingreifenden Fortsätze (210) des Innenteils (200) schwalbenschwanzförmig sind.

13. Fahrradbremsscheibe (1) nach einem der vorhergehenden Ansprüche, bei der die in die Aussparungen (110) des Bremsbandes (100) eingreifenden Fortsätze (210) des Innenteils (200) mehrfach schwalbenschwanzförmig ausgebildet sind.

14. Fahrradscheibenbremse mit einer Fahrradbremscheibe (1) nach einem der vorhergehenden Ansprüche.

## Claims

1. Bicycle brake disk (1) for a hydraulic disk brake comprising a brake band (100) made from a first material having a high thermal resistance and an inner part (200) made from a second material having a higher thermal conductivity than the first material,
the brake band (100) having a plurality of recesses (110) in which extensions (210) of the inner part (200) engage,
**characterized in that** the extensions (210) of the inner part (200) each have at least one portion in which the width of the extension (210) increases radially outwards in the circumferential direction of the bicycle brake disk (1).

2. Bicycle brake disk (1) according to claim 1, **characterized in that** the recesses (110) of the brake band (100) each have at least one portion in which the width of the recess (110) increases radially outwards in the circumferential direction of the brake disk (1).

3. Bicycle brake disk (1) according to any of the preceding claims, **characterized in that** the extensions (210) of the inner part (200) each have a plurality of portions in which the width of the extension (210) increases radially outwards in the circumferential direction of the bicycle brake disk (1) .

4. Bicycle brake disk (1) according to any of the preceding claims, **characterized in that** the recesses (110) of the brake band (100) each have a plurality of portions in which the width of the recess (110) increases radially outwards in the circumferential direction of the bicycle brake disk (1).

5. Bicycle brake disk (1) according to any of the preceding claims, **characterized in that** at least one extension (210) of the inner part (200) has a wear indicator device.

6. Bicycle brake disk (1) according to any of the preceding claims, **characterized in that** the brake band (100) has a plurality of radially inwards extending extensions (120) which engage in corresponding recesses (220) of the inner part (200).

7. Bicycle brake disk (1) according to any of the preceding claims, **characterized in that** cooling surfaces (280) are formed on the inner part (200).

8. Bicycle brake disk (1) according to any of the preceding claims, **characterized in that** the bicycle brake disk (1) has a cooling device (400) with cooling surfaces (480).

9. Bicycle brake disk (1) according to claim 8, **characterized in that** the cooling device (400) has extensions (410) which, together with extensions (210) of the inner part (200), engage in at least some of the recesses (110) of the brake band (100).

10. Bicycle brake disk (1) according to any of the preceding claims, in which the dimension of the extensions (210) of the inner part (200) in the circumferential direction is less than 60%, preferably less than 55%, more preferably less than 50%, even more preferably less than 45% and preferentially about 40% of the corresponding dimension of the interposed portions of the brake band (100).

11. Bicycle brake disk (1) according to any of the preceding claims, wherein the dimension of the extensions (210) of the inner part (200) in the circumferential direction is more than 20%, preferably more than 25%, more preferably more than 30%, even more preferably more than 35% and preferentially about 40% of the corresponding dimension of the interposed portions of the brake band (100).

12. Bicycle brake disk (1) according to any of the preceding claims, in which the extensions (210) of the inner part (200) engaging in the recesses (110) of the brake band (100) are dovetailed.

13. Bicycle brake disk (1) according to any of the preceding claims, wherein the extensions (210) of the inner part (200) that engage in the recesses (110) of the brake band (100) have a multiple dovetail shape.

14. Bicycle disk brake comprising a bicycle brake disk (1) according to any of the preceding claims.

## Revendications

1. Disque de frein de bicyclette (1) pour un frein à disque hydraulique comprenant une bande de frein (100) en un premier matériau ayant une résistance thermique élevée, et une partie intérieure (200) en un second matériau ayant une conductivité thermique plus élevée que celle du premier matériau,
**caractérisé en ce que** la bande de frein (100) présente plusieurs échancrures (110) dans lesquelles s'engagent des prolongements (210) de la partie intérieure (200),
**caractérisé en ce que**
les prolongements (210) de la partie intérieure (200) présentent chacun au moins une portion dans laquelle la largeur du prolongement (210) augmente radialement vers l'extérieur dans la direction circonférentielle du disque de frein de bicyclette (1).

2. Disque de frein de bicyclette (1) selon la revendication 1,
**caractérisé en ce que** les échancrures (110) de la bande de frein (100) présentent chacune au moins une portion dans laquelle la largeur de l'échancrure (110) augmente radialement vers l'extérieur dans la direction circonférentielle du disque de frein (1).

3. Disque de frein de bicyclette (1) selon l'une des revendications précédentes,
**caractérisé en ce que** les prolongements (210) de la partie intérieure (200) présentent chacun plusieurs portions dans lesquelles la largeur du prolongement (210) augmente radialement vers l'extérieur dans la direction circonférentielle du disque de frein de bicyclette (1).

4. Disque de frein de bicyclette (1) selon l'une des revendications précédentes,
**caractérisé en ce que** les échancrures (110) de la bande de frein (100) présentent chacune plusieurs portions dans lesquelles la largeur de l'échancrure (110) augmente radialement vers l'extérieur dans la direction circonférentielle du disque de frein de bicyclette (1).

5. Disque de frein de bicyclette (1) selon l'une des revendications précédentes,
**caractérisé en ce qu'**au moins un prolongement (210) de la partie intérieure (200) comprend un dispositif indicateur d'usure.

6. Disque de frein de bicyclette (1) selon l'une des revendications précédentes, **caractérisé en ce que**
la bande de frein (100) présente plusieurs prolongements (120) qui s'étendent radialement vers l'intérieur et qui s'engagent dans des échancrures correspondantes (220) de la partie intérieure (200).

7. Disque de frein de bicyclette (1) selon l'une des revendications précédentes,
**caractérisé en ce que** des surfaces de refroidissement (280) sont réalisées sur la partie intérieure (200).

8. Disque de frein de bicyclette (1) selon l'une des revendications précédentes,
**caractérisé en ce que** le disque de frein de bicyclette (1) comprend un dispositif de refroidissement (400) ayant des surfaces de refroidissement (480).

9. Disque de frein de bicyclette (1) selon la revendication 8,
**caractérisé en ce que** le dispositif de refroidissement (400) présente des prolongements (410) qui, conjointement avec les prolongements (210) de la partie intérieure (200), s'engagent dans au moins certaines des échancrures (110) de la bande de frein (100).

10. Disque de frein de bicyclette (1) selon l'une des revendications précédentes,
dans lequel la dimension circonférentielle des prolongements (210) de la partie intérieure (200) est inférieure à 60 %, de préférence inférieure à 55 %, de manière particulièrement préférée inférieure à 50 %, de manière tout particulièrement préférée inférieure à 45 % et de préférence égale à environ 40 % de la dimension correspondante des portions interposées de la bande de frein (100).

11. Disque de frein de bicyclette (1) selon l'une des revendications précédentes,
dans lequel la dimension circonférentielle des prolongements (210) de la partie intérieure (200) est supérieure à 20 %, de préférence supérieure à 25 %, de manière particulièrement préférée supérieure à 30 %, de manière tout particulièrement préférée supérieure à 35 % et de préférence égale à environ 40 % de la dimension correspondante des portions interposées de la bande de frein (100).

12. Disque de frein de bicyclette (1) selon l'une des revendications précédentes,
dans lequel les prolongements (210) de l'élément intérieure (200) qui s'engagent dans les échancrures (110) de la bande de frein (100) sont en forme de queue d'aronde.

13. Disque de frein de bicyclette (1) selon l'une des revendications précédentes,
dans lequel les prolongements (210) de la partie intérieure (200) qui s'engagent dans les échancrures (110) de la bande de frein (100) sont réalisés en forme de queues d'aronde multiples.

14. Frein à disque de bicyclette comprenant un disque de frein de bicyclette (1) selon l'une des revendications précédentes.
